Europäisches Patentamt

European Patent Office

Office européen des brevets

(19)

(11) **EP 1 551 108 A1**

(12) **DEMANDE DE BREVET EUROPEEN**

(43) Date de publication:
**06.07.2005 Bulletin 2005/27**

(51) Int Cl.7: **H04B 1/707**

(21) Numéro de dépôt: **04290002.7**

(22) Date de dépôt: **05.01.2004**

(84) Etats contractants désignés:
**AT BE BG CH CY CZ DE DK EE ES FI FR GB GR HU IE IT LI LU MC NL PT RO SE SI SK TR**
Etats d'extension désignés:
**AL LT LV MK**

(71) Demandeur: **STMicroelectronics N.V.**
**1118 BH Schiphol Airport Amsterdam (NL)**

(72) Inventeur: **Bonhomme, Corinne**
**01630 Sergy (FR)**

(74) Mandataire: **Zapalowicz, Francis**
**Bureau D.A. Casalonga-Josse,**
**Paul-Heyse-Strasse 33**
**80336 München (DE)**

(54) **Procédé de sélection d'échos d'un signal aux fins de leur affectation aux doigts d'un récepteur Rake, et récepteur Rake correspondant**

(57)     Le procédé de traitement d'un signal émanant d'un milieu de transmission multitrajets, comprend une détection d'un nombre L (ECH1-ECH6) d'échos du signal reçu, L étant supérieur au nombre N de doigts d'un récepteur « Rake », et une sélection parmi les L échos détectés de N échos. Certains au moins (ECH1-ECH5) des L échos détectés étant des échos temporellement corrélés selon un critère de corrélation prédéterminé, l'étape de sélection comporte une détermination à partir des amplitudes complexes initiales associées à au moins les échos temporellement corrélés, d'énergies individuelles pondérées ($\lambda 1$-$\lambda 6$) correspondant respectivement à des échos virtuels temporellement décorrélés, et la sélection parmi les L échos de N échos (ECH1, ECH4, ECH6) en fonction d'un critère de puissance prédéterminé prenant en compte au moins lesdites énergies individuelles pondérées.

FIG.7

EP 1 551 108 A1

**Description**

L'invention concerne le traitement de signaux incidents au sein d'un récepteur de signaux.

L'invention s'applique ainsi avantageusement à un récepteur qui combine plusieurs composantes de signaux multi-trajets mutuellement retardées par des retards temporels différents avant d'atteindre le récepteur.

Un tel récepteur est par exemple présent dans les systèmes de communication sans fil à accès multiples par division de code (système CDMA), et est couramment désigné par l'homme du métier sous la dénomination de récepteur de type râteau ou récepteur « Rake ».

Dans un système de communication sans fil, une station de base communique avec une pluralité de terminaux distants, tels que des téléphones mobiles cellulaires. Les accès multiples par division de fréquence (FDMA : "Frequency-Division Multiple Access" en langue anglaise) et les accès multiples par division temporelle (TDMA : "Time Division Multiple Access" en langue anglaise) sont les schémas d'accès multiples traditionnels pour délivrer des services simultanés à un certain nombre de terminaux. L'idée de base sous-jacente aux systèmes FDMA et TDMA consiste à partager la ressource disponible, respectivement en plusieurs fréquences ou en plusieurs intervalles temporels, de telle sorte que plusieurs terminaux peuvent fonctionner simultanément sans provoquer d'interférence.

Les téléphones fonctionnant selon la norme GSM appartiennent aux systèmes FDMA et TDMA en ce sens que l'émission et la réception s'effectuent à des fréquences différentes et également à des intervalles temporels différents.

A l'opposé de ces systèmes utilisant une division de fréquence ou une division temporelle, les systèmes CDMA (Système à accès multiples par division de code; "Code Division Multiple Access" en langue anglaise) permettent aux utilisateurs multiples de partager une fréquence commune et un canal temporel commun en utilisant une modulation codée. Parmi les systèmes CDMA on peut citer le système CDMA 2000, le système WCDMA ("Wide Band CDMA" en langue anglaise; CDMA large bande) ou la norme IS-95.

Dans les systèmes CDMA, comme il est bien connu par l'homme du métier, un code d'embrouillage ("scrambling code" en langue anglaise) est associé à chaque station de base et permet de distinguer une station de base d'une autre. En outre, un code orthogonal, connu par l'homme du métier sous la dénomination de "Code OVSF", est alloué à chaque terminal distant (comme par exemple un téléphone mobile cellulaire). Tous les codes OVSF sont orthogonaux entre eux, ce qui permet de distinguer un canal d'un autre.

Avant d'émettre un signal sur le canal de transmission à destination d'un terminal distant, le signal a été embrouillé et étalé (« spread » en langue anglaise) par la station de base en utilisant le code d'embrouillage de la station de base et le code OVSF du canal.

Dans les systèmes CDMA, on peut encore distinguer ceux qui utilisent une fréquence distincte pour l'émission et la réception (système CDMA-FDD) et ceux qui utilisent une fréquence commune pour l'émission et la réception, mais des domaines temporels distincts pour l'émission et la réception (système CDMA-TDD).

L'invention s'applique avantageusement aux systèmes de communication du type CDMA, et plus particulièrement aux systèmes du type WCDMA à accès radio-terrestres (UTRA FDD/TDD).

Le signal incident reçu par un téléphone mobile par exemple, comporte différentes versions temporellement retardées du signal initialement transmis, versions ou échos qui sont le résultat des caractéristiques de transmission multi-trajets du milieu de transmission entre une station de base et le téléphone. Et, chaque trajet introduit un retard différent.

Le récepteur «Rake» qui équipe un téléphone mobile cellulaire fonctionnant dans un système de communication CDMA, est utilisé pour effectuer l'alignement temporel, le désembrouillage, le désétalement, la correction canal et la combinaison des versions retardées des signaux initiaux, de façon à délivrer les flux d'informations (symboles) contenus dans les signaux initiaux.

Un récepteur « Rake » comporte plusieurs doigts, chaque doigt étant destiné à démoduler un trajet donné reçu à un instant donné.

Par ailleurs, le récepteur comporte une unité d'estimation de canal qui a pour but d'identifier les différents échos par leur retard et leur énergie moyenne ainsi qu'un mécanisme de sélection d'échos en vue de leur affectation respective aux doigts du récepteur Rake.

Généralement, le nombre d'échos détectés est supérieur à la capacité de traitement du récepteur (nombre de doigts) pour des raisons de limitation de complexité matérielle.

Aussi, utilise-t-on à l'heure actuelle un mécanisme de sélection capable de sélectionner parmi les L échos détectés, les N meilleurs échos (N étant le nombre de doigts du récepteur), c'est-à-dire ceux qui fournissent le taux d'erreur binaire minimal.

Le critère généralement adopté est celui du rapport signal à bruit. Ainsi, on sélectionne parmi les L échos détectés les N échos de plus fort rapport signal à bruit.

Un tel critère fournit une bonne solution tant que la séparation minimale entre les différents échos du profil de propagation radio (estimation de canal) reste relativement importante. Or, pour augmenter les performances du récepteur, il convient de prendre en compte les échos proches, c'est-à-dire temporellement corrélés. L'invention vise à apporter une solution à ce problème.

L'invention a ainsi pour but l'amélioration des performances d'un récepteur du type « Rake » pour des profils denses de propagation radio, en particulier pour des téléphones mobiles de nouvelle génération destinés à recevoir des paquets de données à haute vitesse (HSDPA : « High speed data paquet »).

En effet, avec les systèmes HSDPA, on peut rencontrer des échos extrêmement proches, c'est-à-dire temporellement espacés d'une durée inférieure à la durée d'un fragment (« Chip », en langue anglaise).

On rappelle à cet égard que dans les systèmes CDMA notamment, les symboles sont émis au sein de trames successives, chaque trame étant subdivisée en un certain nombre d'intervalles temporels (slots). Chaque intervalle temporel véhicule un certain nombre de symboles, chaque symbole étant constitué d'un nombre prédéterminé de fragments (« Chips »).

L'invention propose donc un procédé de traitement d'un signal émanant d'un milieu de transmission multi-trajets, comprenant une détection d'un nombre L d'échos du signal reçu, L étant supérieur au nombre N de doigts d'un récepteur « Rake », et une sélection de N échos parmi les L échos détectés.

Selon une caractéristique générale de l'invention, certains au moins des L échos détectés étant des échos temporellement corrélés selon un critère de corrélation prédéterminé, l'étape de sélection comporte

- une détermination à partir des amplitudes complexes initiales associées à au moins les échos temporellement corrélés, d'énergies individuelles pondérées correspondant respectivement à des échos virtuels temporellement décorrélés, et
- la sélection de N échos parmi les L échos en fonction d'un critère de puissance prédéterminé prenant en compte au moins lesdites énergies individuelles pondérées.

En d'autres termes, la nouvelle représentation à l'aide des énergies individuelles pondérées fournit une représentation équivalente mais avec des évanouissements (« fading », en langue anglaise) indépendants et une nouvelle répartition de puissance sur ces échos. Le fait que les nouveaux échos virtuels soient indépendants permet alors d'appliquer un critère basé sur des puissances mais en utilisant cette fois-ci des puissances modifiées. Et on peut montrer mathématiquement que cette nouvelle représentation n'affecte ni le bruit ni l'énergie de l'ensemble du processus représenté par les L échos.

Selon un mode de mise en oeuvre de l'invention, lorsque le signal reçu véhicule des symboles, chaque symbole étant constitué d'un nombre prédéterminé de fragments, deux échos sont déclarés temporellement corrélés lorsqu'ils sont temporellement espacés d'une durée inférieure à la durée d'un fragment.

Plusieurs variantes de mise en oeuvre de l'invention peuvent être envisagées.

Selon une première variante, on peut déterminer les énergies individuelles pondérées à partir des amplitudes complexes initiales de l'ensemble des L échos.

Ainsi, par exemple, dans l'étape de sélection on définit toutes les combinaisons possibles de N échos parmi les L échos détectés, et pour chacune des combinaisons, on calcule un jeu de N énergies individuelles pondérées à partir des amplitudes complexes initiales des N échos de ladite combinaison. On calcule également pour la combinaison considérée, la somme de ces N énergies individuelles pondérées. Et, on sélectionne la combinaison de N échos dont ladite somme associée est la plus grande.

Le calcul du jeu de N énergies individuelles pondérées associées à une combinaison de N échos comporte par exemple la détermination de la matrice de covariance des amplitudes complexes initiales desdits N échos, et la détermination des N valeurs propres de ladite matrice de covariance.

La mise en oeuvre d'une telle variante lorsque le nombre N est relativement grand, par exemple supérieur à quatre, devient complexe en raison notamment de la grande taille de la matrice de covariance que l'on doit d'abord estimer sur la base de mesure sur les échos et ensuite diagonaliser. Cette complexité est relativement grande pour les récepteurs CDMA usuels.

Aussi, est-il prévu une autre variante de mise en oeuvre de l'invention, beaucoup plus adaptée pour des cas plus concrets de profils de propagation.

Selon cette variante, on peut ainsi regrouper les échos en une famille d'échos denses (c'est-à-dire temporellement corrélés) et une famille d'échos épars (c'est-à-dire lointains).

En d'autres termes, selon cette variante de l'invention, dans l'hypothèse où les L échos détectés comportent L1 échos temporellement corrélés et L-L1 échos éventuels restant dits « éloignés », L1 étant supérieur ou égal à 2 et inférieur ou égal à L, l'étape de sélection comporte une première sélection selon un premier critère de sélection de L2 échos parmi les L1 échos, L2 étant inférieur ou égal à L1.

A titre indicatif, dans le cas où L1 est un nombre impair, on éliminera ainsi au moins un des L1 échos temporellement corrélés de façon à obtenir un nombre L2 pair. Si par contre L1 est déjà pair, alors on pourra choisir L2=L1 et n'effectuer aucune première sélection.

Il est par ailleurs prévu une détermination à partir des amplitudes complexes initiales des L2 échos, des énergies individuelles pondérées correspondant respectivement à des échos virtuels temporellement décorrélés, ainsi qu'une affectation de ces énergies individuelles pondérées aux L2 échos sélectionnés.

Puis, on sélectionne parmi les L2 échos et les L-L1 échos éloignés, les N échos en fonction d'un critère de puissance prédéterminé prenant en compte lesdites L2 énergies individuelles pondérées et les L-L1 énergies individuelles initiales des L-L1 échos restants éventuels.

Lorsque le nombre L2 est pair, on traite avantageusement les L2 échos par paires. Ainsi, par exemple, pour chaque paire d'échos on calcule une paire d'énergies individuelles pondérées à partir des amplitudes complexes initiales de la paire d'échos et on sélectionne les N échos ayant les N plus grandes valeurs d'énergie parmi les L2 énergies individuelles pondérées et les L-L1 énergies individuelles initiales des éventuels L-L1 échos éloignés.

Le calcul d'une paire d'énergies individuelles pondérées associée à une paire d'échos comporte par exemple la détermination de la matrice de covariance des amplitudes complexes initiales desdits échos, et la détermination des deux valeurs propres de ladite matrice de covariance.

L'invention a également pour objet un récepteur du type « Rake », comprenant une entrée pour recevoir un signal émanant d'un milieu de transmission multi-trajets, des moyens de détection détectant un nombre L d'échos du signal reçu, L étant supérieur au nombre N de doigts du récepteur « Rake », et des moyens de traitement aptes à sélectionner N échos parmi les L échos.

Selon une caractéristique générale de l'invention, certains au moins des L échos détectés sont des échos temporellement corrélés selon un critère de corrélation prédéterminé, et les moyens de traitement comportent

- des moyens de calcul aptes à déterminer à partir des amplitudes complexes initiales associées à au moins les échos temporellement corrélés, des énergies individuelles pondérées correspondant respectivement à des échos virtuels temporellement décorrélés, et
- des moyens de sélection aptes à sélectionner N échos parmi les L échos en fonction d'un critère de puissance prédéterminé prenant en compte au moins lesdites énergies individuelles pondérées.

Selon un mode de réalisation de l'invention, les moyens de détermination sont aptes à déterminer des énergies individuelles pondérées à partir des amplitudes complexes initiales de l'ensemble des L échos.

Selon un mode de réalisation de l'invention, les moyens de calcul sont aptes à définir toutes les combinaisons possibles de N échos parmi les L échos détectés, et pour chacune des combinaisons, à calculer un jeu de N énergies individuelles pondérées à partir des amplitudes complexes initiales des N échos de ladite combinaison, ainsi que la somme de ces N énergies individuelles pondérées, et les moyens de sélection sélectionnent la combinaison de N échos dont ladite somme associée est la plus grande.

Selon un mode de réalisation de l'invention, les moyens de calcul sont aptes, pour le calcul du jeu de N énergies individuelles pondérées associé à une combinaison de N échos, à déterminer la matrice de covariance des amplitudes complexes initiales desdits N échos, et à déterminer les N valeurs propres de ladite matrice de covariance.

Selon une autre variante de l'invention, les L échos détectés comportant L1 échos temporellement corrélés, et L-L1 échos éventuels restants dits éloignés, L1 étant supérieur ou égal à 2 et inférieur ou égal à L, les moyens de traitement comportent

- des moyens de sélection auxiliaires aptes à effectuer une première sélection selon un premier critère de sélection de L2 échos parmi les L1 échos, L2 étant inférieur ou égal à L1.

Les moyens de calcul sont aptes à déterminer à partir des amplitudes complexes initiales des L2 échos, des énergies individuelles pondérées correspondant respectivement à des échos virtuels temporellement décorrélés et à affecter ces énergies individuelles pondérées aux L2 échos sélectionnés. Et les moyens de sélection sont aptes à sélectionner les N échos parmi les L2 échos et les L-L1 échos éloignés, en fonction d'un critère de puissance prédéterminé prenant en compte lesdites énergies individuelles pondérées et les L-L1 énergies individuelles des L-L1 échos restants.

Dans le cas où L1 est un nombre impair, les moyens de sélection auxiliaires sont par exemple aptes à éliminer au moins un des L1 échos temporellement corrélés, de façon à obtenir un nombre L2 pair.

Selon un mode de réalisation de l'invention, les moyens de calcul sont aptes à traiter les L2 échos par paire. Pour chaque paire d'échos, les moyens de calcul sont aptes à calculer une paire d'énergies individuelles pondérées à partir des amplitudes complexes initiales de la paire d'échos, et les moyens de sélection sélectionnent les N échos ayant les N plus grandes valeurs d'énergie parmi les L2 énergies individuelles pondérées et les L-L1 énergies individuelles initiales des éventuels L-L1 échos éloignés.

Selon un mode de réalisation de l'invention, pour le calcul d'une paire d'énergies individuelles pondérées associée à une paire d'échos, les moyens de calcul sont aptes à déterminer la matrice de covariance des amplitudes complexes initiales desdits échos, et à déterminer les 2 valeurs propres de ladite matrice de covariance.

L'invention propose également un composant d'un système de communication sans fil, incorporant un récepteur tel que défini ci-avant.

Ce composant peut être par exemple un téléphone mobile cellulaire.

D'autres avantages et caractéristiques de l'invention apparaîtront à l'examen de la description détaillée de modes de mise en oeuvre et de réalisation, nullement limitatifs, et des dessins annexés sur lesquels :

- la figure 1 illustre schématiquement un téléphone mobile cellulaire selon l'invention, incorporant un récepteur Rake selon l'invention,

- les figures 2 à 4 illustrent schématiquement les fonctionnalités et une architecture interne d'un récepteur Rake selon l'invention,

- la figure 5 illustre plus en détail des moyens de traitement d'un récepteur Rake selon l'invention,

- la figure 6 illustre un premier mode de mise en oeuvre d'un procédé selon l'invention, et,

- la figure 7 illustre schématiquement un deuxième mode de mise oeuvre d'un procédé selon l'invention.

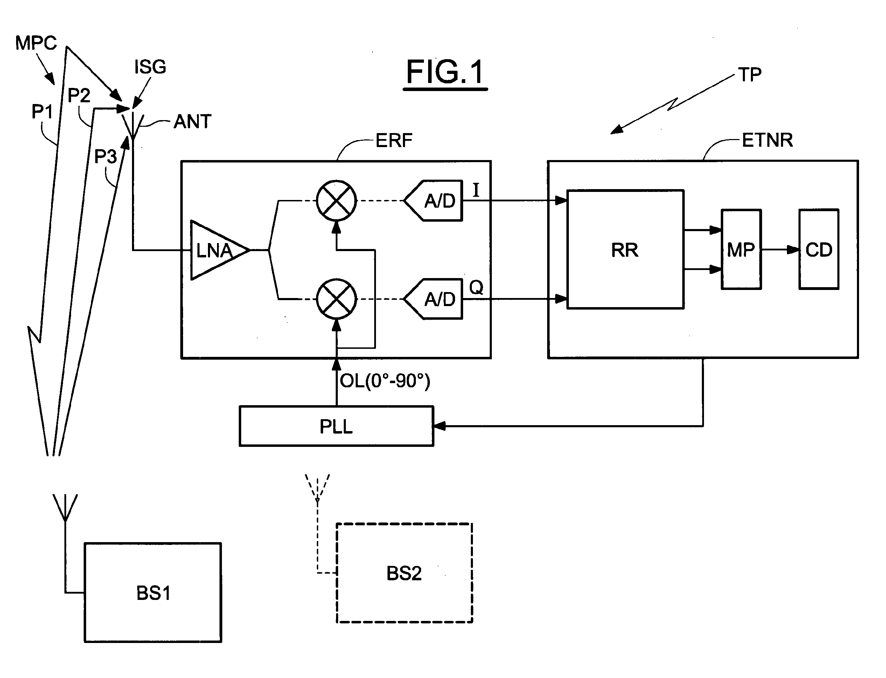

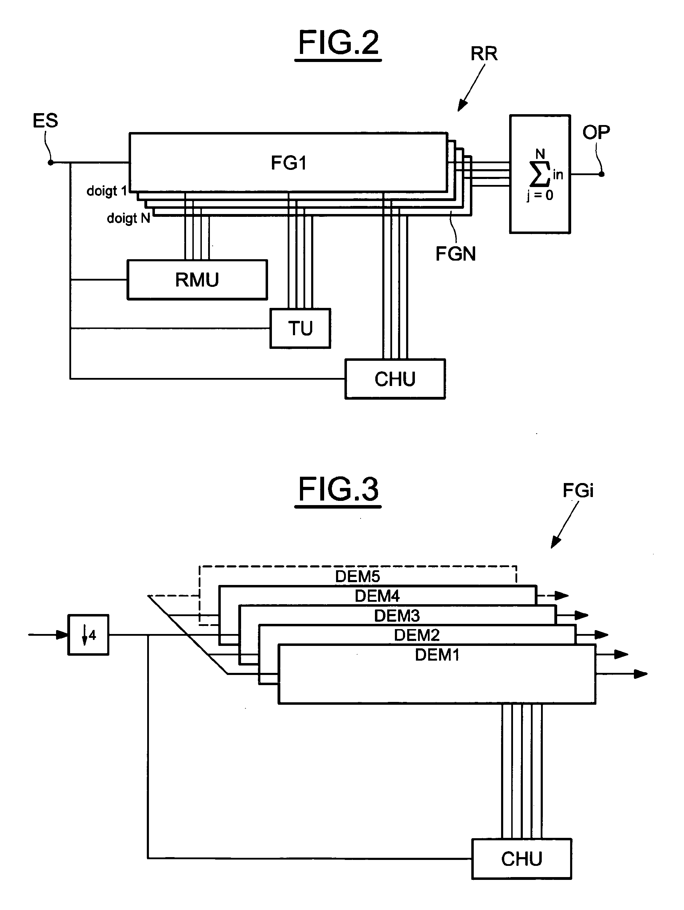

Sur la figure 1, la référence TP désigne un terminal distant, tel qu'un téléphone mobile cellulaire, qui est en communication avec une station de base BS1, par exemple selon un schéma de communication du type CDMA-FDD.

Le téléphone mobile cellulaire comprend, de façon classique, un étage analogique radiofréquence ERF connecté à une antenne ANT pour recevoir un signal d'entrée ISG.

Classiquement, l'étage ERF comprend un amplificateur faible bruit LNA et deux voies de traitement comportant des mélangeurs, des filtres et amplificateurs classiques (non représentés sur la figure 2 à des fins de simplification). Les deux mélangeurs reçoivent respectivement de la part d'une boucle à verrouillage de phase PLL deux signaux présentant mutuellement une différence de phase de 90°. Après transposition de fréquence dans les mélangeurs, les deux voies de traitement définissent respectivement deux flux I (flux direct) et Q (flux en quadrature) selon une dénomination bien connue de l'homme du métier.

Après conversion numérique dans des convertisseurs analogiques/numériques, les deux flux I et Q sont délivrés à un étage de traitement de réception ETNR.

Cet étage de traitement ETNR comprend un récepteur RR, communément désigné par l'homme du métier "récepteur Rake", suivi par des moyens classiques de démodulation MP qui effectuent la démodulation de la constellation délivrée par le récepteur Rake RR. Les moyens MP sont suivis d'un décodeur canal classique CD.

En raison des réflexions possibles du signal initialement transmis, sur des obstacles se situant entre la station de base et le téléphone mobile, le milieu de transmission est en fait un milieu de transmission multi-trajets MPC, c'est-à-dire comprenant plusieurs chemins de transmission différents (trois chemins de transmission P1, P2, P3 sont représentés sur la figure 1). En conséquence, le signal ISG qui est reçu par le téléphone mobile comporte différentes versions temporellement retardées du signal initialement transmis, versions ou échos qui sont le résultat des caractéristiques de transmission multi-trajets du milieu de transmission. Et, chaque trajet introduit un retard différent. Bien entendu, le signal reçu ISG pourrait également résulter de la transmission de signaux initiaux respectivement émis par différentes stations de base BS1 et BS2.

La figure 2 illustre schématiquement les fonctionnalités de base du récepteur « Rake » RR.

Celui-ci est formé de plusieurs doigts (ici N doigts) FG1-FGN. Chaque doigt est destiné à démoduler un trajet donné reçu à un instant donné. La démodulation en bande de base consiste essentiellement en un désembrouillage et un désétalement. Le désétalement est en réalité une corrélation et requiert en conséquence une intégration sur la période symbole. Le récepteur combine ensuite les informations reçues sur chaque doigt dans des moyens de combinaison MCMB, en les sommant après avoir corrigé les distorsions de phase et d'amplitude de chaque trajet (unité CHU décrite ci-après). Bien entendu, les doigts multiples représentés sur la figure 2 peuvent être formés du même doigt physique, reconfiguré N fois pour réaliser les N doigts fonctionnels.

Le récepteur comporte également une unité CHU capable de fournir une estimation du canal de transmission, et ce dans le but notamment de corriger les distorsions du canal.

Il est nécessaire d'allouer N trajets (échos) aux doigts du récepteur. Ceci est effectué par une unité de commande RMU de structure connue, après sélection de N échos.

Enfin, puisque le « timing » relatif des trajets peut varier dans le temps, une unité de suivi (tracking unit) de structure également connue, suit le « timing » des trajets et met à jour les doigts avec cette information.

Sur la figure 3, on voit que chaque doigt FGi comporte un générateur de code CG capable de produire notamment les codes d'embrouillage et les codes OVSF, un sous-échantillonneur, en l'espèce un sous-échantillonneur par quatre, disposé à l'entrée du doigt, ainsi qu'une unité d'estimation de canal CHU.

Par ailleurs, le doigt FGi comporte plusieurs démodulateurs de canaux de transmission physiques, en l'espèce cinq démodulateurs DEM1-DEM5. Chaque démodulateur de canal réalise les fonctions de désembrouillage, de désétalement, d'intégration ainsi que les fonctions de correction de canal évoquées précédemment. L'unité CHU est partagée par tous les canaux de transmission physiques.

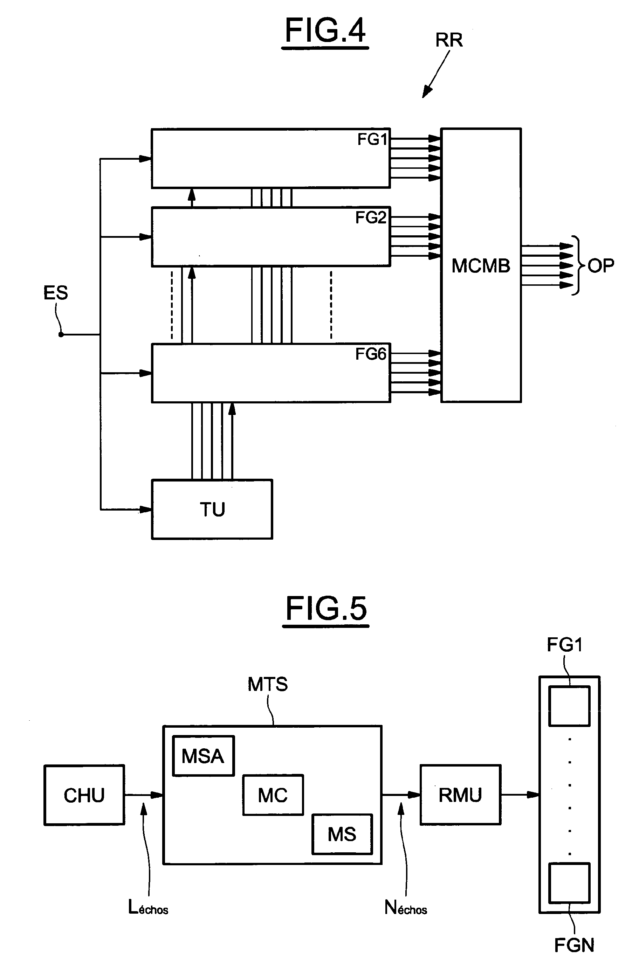

Si l'on se réfère maintenant à la figure 4, qui illustre partiellement un exemple d'architecture interne d'un récepteur « Rake »RR, on voit que l'on retrouve entre l'entrée de signal ES et la sortie OP qui délivre les informations relatives aux différents canaux physiques de transmission (en l'espèce ici cinq canaux physiques), les doigts du récepteur, ici les six doigts FG1-FG6, connectés en sortie aux moyens de combinaison MCMB.

Sur la figure 5, on voit que l'unité CHU a détecté par exemple L échos caractérisés chacun par son retard t, son amplitude complexe (amplitude et phase) s et son énergie individuelle dite « initiale », qui est égale au produit de s et de son conjugué complexe (s.s*).

Ces L échos ont été détectés de façon classique, à la suite d'une estimation de la réponse impulsionelle du canal, en utilisant par exemple la méthode des maxima locaux.

Des moyens de traitement MTS, par exemple réalisés de façon logicielle, vont alors sélectionner parmi ces L échos, N échos qui seront ensuite affectés aux N doigts du récepteur Rake par l'unité RMU.

Bien entendu, matériellement, les moyens MTS peuvent être incorporés au sein de l'unité RMU.

Ces moyens de traitement MTS comportent différents blocs logiciels, à savoir des moyens de sélection auxiliaires MSA, des moyens de calcul MC et des moyens de sélection MS dont on reviendra plus en détail ci-après sur les fonctions.

Parmi ces L échos détectés, certains d'entre eux, éventuellement tous, peuvent être des échos rapprochés, c'est-à-dire temporellement corrélés.

Bien qu'il soit possible d'adopter plusieurs critères pour définir ce que l'on entend par deux échos temporellement corrélés, une façon particulièrement simple consiste à utiliser la durée d'un fragment (« Chip »). Ainsi, deux échos seront déclarés temporellement corrélés lorsqu'ils sont temporellement espacés d'une durée inférieure à la durée d'un fragment. A titre indicatif, dans un système CDMA, la durée d'un fragment peut être égale à 260, 417 nanosecondes.

Les évanouissements (« fadings », en langue anglaise) qui affectent les L échos qu'on considère généralement comme gaussiens complexes ne sont pas indépendants et on peut leur associer leur matrice de covariance K. Cette matrice de dimension L x L est représentée par ses éléments A(i,j)=E[s(i)s(j)*], où E désigne l'opérateur « espérance mathématique », et * désigne le conjugué complexe.

Quand les échos sont relativement séparés, c'est-à-dire non temporellement corrélés, avec par exemple une séparation minimale supérieure à la durée d'un fragment, alors cette matrice est pratiquement diagonale et ses éléments diagonaux sont constitués des énergies moyennes individuelles initiales des échos. Et l'on obtient une représentation uniquement à l'aide de ces énergies individuelles initiales.

Cependant, pour des échos denses, la matrice de covariance ne peut plus être assimilée à une matrice diagonale. Aussi, l'invention prévoit elle une nouvelle représentation des L échos, cette nouvelle représentation, équivalente à la précédente, mettant en oeuvre des échos virtuels temporellement décorrélés associés à des évanouissements indépendants, ainsi qu'une nouvelle répartition de puissance sur ces échos.

Le fait que les nouveaux échos (échos virtuels) soient indépendants permet alors d'appliquer un critère de puissance non pas sur les énergies individuelles initiales mais sur les énergies individuelles pondérées de ces nouveaux échos.

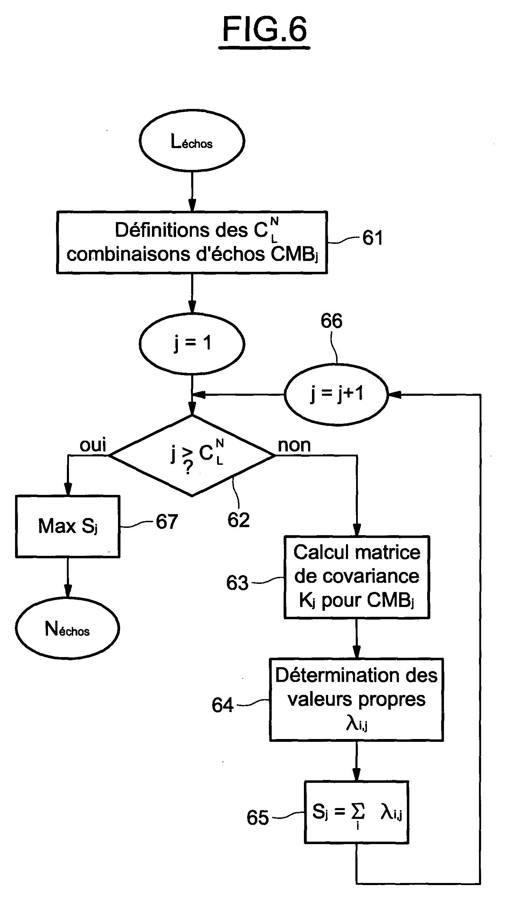

Plus précisément, selon une première variante de mise en oeuvre du procédé selon l'invention, illustrée sur la figure 6, on prend en compte l'ensemble des L échos, qu'ils soient temporellement corrélés ou non, pour calculer des énergies individuelles pondérées correspondant à des échos virtuels temporellement décorrélés.

Cela étant, en pratique, le simple calcul des valeurs propres fait perdre le lien entre l'écho et la valeur propre qui lui est associée et donc il devient alors difficile de décider quels échos conserver.

La variante de mise en oeuvre illustrée sur la figure 6 apporte une solution à ce problème.

A cet égard, on définit dans une étape 61, toutes les combinaisons possibles de N échos parmi L de façon à obtenir $C_L^N$ combinaison CMB$_j$.

Puis, pour chacune de ces combinaisons CMB$_j$, on calcule (étape 63) la matrice de covariance associée K$_j$.

On détermine ensuite de façon classique les N valeurs propres $\lambda_j$ associées aux N échos de la combinaison considérée (étape 64).

Ces valeurs propres constituent lesdites énergies individuelles pondérées.

Puis, dans une étape 65, on calcule la somme de ces énergies individuelles pondérées de façon à obtenir une somme S$_j$ associée à la combinaison considérée de N échos.

Lorsque toutes les combinaisons ont été traitées, on détermine (étape 67) quelle est la somme maximale et l'on va alors sélectionner les N échos de la combinaison associée à cette somme maximale.

Fonctionnellement, ce sont les moyens de calcul MC incorporés dans les moyens de traitement MTS, qui effectuent les étapes 63 à 65 tandis que l'étape 67 est effectuée par les moyens de sélection MS.

Cela étant, la mise en oeuvre d'une telle variante devient relativement compliquée lorsque le nombre de doigts est relativement grand, par exemple supérieur à quatre. C'est le cas pour les récepteurs CDMA usuels.

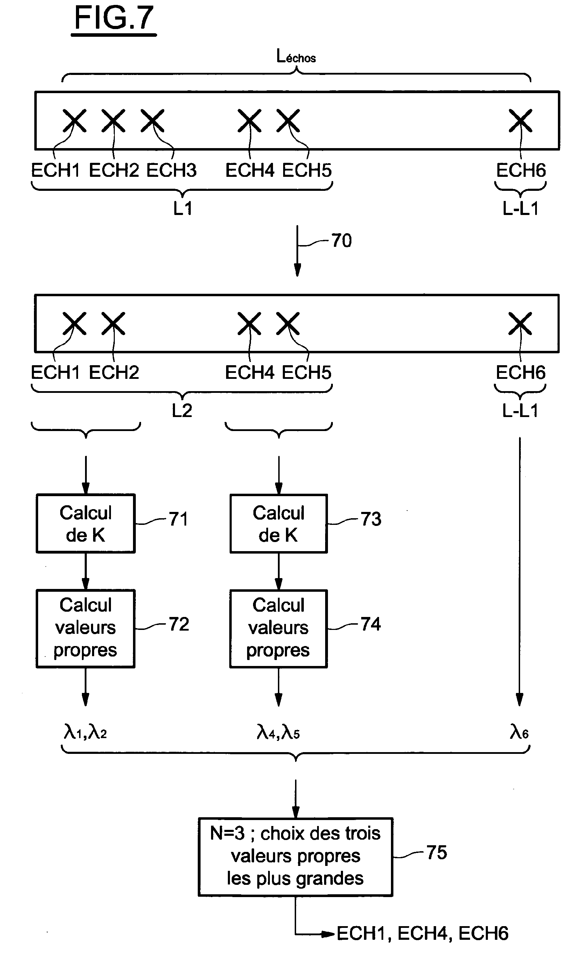

Aussi, l'invention propose-t-elle une autre variante de mise en oeuvre qui permet d'approximer le calcul complet pour les cas les plus concrets de profils de propagation. Un telle variante de mise en oeuvre est illustrée sur la figure 7.

D'un façon générale, on va regrouper les échos en une famille d'échos denses (temporellement corrélés) et d'échos restants (éventuels), c'est-à-dire des échos lointains. Puis, on va appliquer la procédure de calcul des énergies individuelles pondérées sur la famille d'échos denses et garder intact le reste des échos.

Plus précisément, si l'on considère L échos (6 sur la figure 7) et trois doigts (N=4) on voit que les L échos comportent cinq échos denses ECH1-ECH5 formés de deux familles ECH1-ECH3 et ECH4-ECH5, ainsi qu'un écho lointain ECH6.

Les moyens de sélection auxiliaires MSA des moyens de traitement MTS vont alors avantageusement éliminer un écho dense parmi les cinq échos ECH1-ECH5. Et, plus précisément, puisque l'on va travailler par paires d'échos ultérieurement, les moyens de sélection auxiliaires MSA vont supprimer un écho parmi la famille des trois premiers échos ECH1-ECH3. Cette suppression peut s'effectuer selon un critère de puissance. On pourra par exemple éliminer l'écho ayant l'énergie individuelle initiale la plus faible.

On suppose alors après l'étape de présélection 70 que l'on obtient L2 échos temporellement corrélés formés de deux paires d'échos ECH1-ECH2 d'une part et ECH4-ECH5 d'autre part, ainsi qu'un écho restant ECH6.

Les moyens de calcul vont alors déterminer pour la paire d'échos ECH1-ECH2, la matrice de covariance correspondante qui est cette fois-ci une matrice 2 x 2. Le calcul des valeurs propres (étape 72) se révèle alors particulièrement simple et fournit les deux valeurs propres $\lambda 1$ et $\lambda 2$ qui correspondent aux énergies individuelles pondérées des nouveaux échos virtuels. Et, puisque la matrice de covariance est une matrice 2 x 2, on ne perd pas le lien entre l'écho et sa valeur propre.

Les moyens de calcul effectuent les mêmes opérations (étape 73 et étape 74) pour la paire d'échos ECH4 et ECH5 de façon à obtenir deux valeurs propres $\lambda 4$ et $\lambda 5$.

Par ailleurs, la valeur $\lambda 6$ correspond à l'énergie individuelle initiale de l'écho ECH6.

Puis, puisque N est ici égal à 3, les moyens de sélection vont choisir trois valeurs propres parmi les cinq valeurs propres $\lambda 1$, $\lambda 2$, $\lambda 4$, $\lambda 5$ et $\lambda 6$.

Et, ici, le critère de sélection consiste simplement à choisir les trois valeurs propres les plus grandes et par conséquent à sélectionner les trois échos correspondants, que l'on suppose être dans le cas présent les échos ECH1, ECH4 et ECH6.

## Revendications

1. Procédé de traitement d'un signal émanant d'un milieu de transmission multitrajets, comprenant une détection d'un nombre L (ECH1-ECH6) d'échos du signal reçu, L étant supérieur au nombre N de doigts d'un récepteur « Rake », et une sélection parmi les L échos détectés de N échos, **caractérisé par le fait que** certains au moins (ECH1-ECH5) des L échos détectés sont des échos temporellement corrélés selon un critère de corrélation prédéterminé, et **par le fait que** l'étape de sélection comporte une détermination à partir des amplitudes complexes initiales associées à au moins les échos temporellement corrélés, d'énergies individuelles pondérées ($\lambda 1$-$\lambda 6$) correspondant respectivement à des échos virtuels temporellement décorrélés, et la sélection parmi les L échos de N échos (ECH1, ECH4, ECH6) en fonction d'un critère de puissance prédéterminé prenant en compte au moins lesdites énergies individuelles pondérées.

2. Procédé selon la revendication 1, **caractérisé par le fait qu'**on détermine des énergies individuelles pondérées à partir des amplitudes complexes initiales de l'ensemble des L échos.

3. Procédé selon la revendication 1 ou 2, **caractérisé par le fait que** dans l'étape de sélection on définit (61) toutes les combinaisons possibles de N échos parmi les L échos détectés, et pour chacune des combinaisons (CMBj), on calcule (63,64) un jeu de N énergies individuelles pondérées à partir des amplitudes complexes initiales des N échos de ladite combinaison, ainsi que la somme (Sj) de ces N énergies individuelles pondérées, et on sélectionne (67) la combinaison de N échos dont ladite somme associée est la plus grande.

4. Procédé selon la revendication 3, **caractérisé par le fait que** le calcul du jeu de N énergies individuelles pondérées associé à une combinaison de N échos, comporte la détermination de la matrice de covariance (Kj) des amplitudes complexes initiales desdits N échos, et la détermination des N valeurs propres de ladite matrice de covariance.

5. Procédé selon la revendication 1, **caractérisé par le fait que** les L échos détectés comportant L1 échos temporellement corrélés, et L-L1 échos éventuels restants dits éloignés, L1 étant supérieur ou égal à 2 et inférieur ou égal à L, l'étape de sélection comporte une première sélection (70) selon un premier critère de sélection de L2 échos parmi les L1 échos, L2 étant inférieur ou égal à L1, une détermination à partir des amplitudes complexes initiales des L2 échos des énergies individuelles pondérées correspondant respectivement à des échos virtuels temporellement décorrélés, une affection de ces énergies individuelles pondérées aux L2 échos sélectionnés, et la sélection (75) parmi les L2 échos et les L-L1 échos éloignés, des N échos en fonction d'un critère de puissance prédéterminé prenant en compte lesdites énergies individuelles pondérées et les L-L1 énergies individuelles des L-L1 échos restants.

6. Procédé selon la revendication 5, **caractérisé par le fait que** dans le cas où L1 est un nombre impair, on élimine (70) au moins un des L1 échos temporellement corrélés, de façon à obtenir un nombre L2 pair.

7. Procédé selon la revendication 6, **caractérisé par le fait qu'**on traite les L2 échos par paire, **par le fait que** pour chaque paire d'échos on calcule une paire d'énergies individuelles pondérées ($\lambda$) à partir des

amplitudes complexes initiales de la paire d'échos, et **par le fait qu'**on sélectionne les N échos ayant les N plus grandes valeurs d'énergie parmi les L2 énergies individuelles pondérées et les L-L1 énergies individuelles initiales des éventuels L-L1 échos éloignés.

8.  Procédé selon la revendication 7, **caractérisé par le fait que** le calcul d'une paire d'énergies individuelles pondérées associée à une paire d'échos, comporte la détermination de la matrice de covariance des amplitudes complexes initiales desdits échos, et la détermination des 2 valeurs propres de ladite matrice de covariance.

9.  Procédé selon l'une des revendications précédentes, **caractérisé par le fait que** le signal reçu véhicule des symboles, chaque symbole étant constitué d'un nombre prédéterminé de fragments, et **par le fait que** deux échos sont déclarés temporellement corrélés lorsqu'il sont temporellement espacés d'une durée inférieure ou égale à la durée d'un fragment.

10. Récepteur du type « Rake », comprenant une entrée pour recevoir un signal émanant d'un milieu de transmission multitrajets, des moyens de détection détectant un nombre L d'échos du signal reçu, L étant supérieur au nombre N de doigts d'un récepteur « Rake », et des moyens de traitement aptes à sélectionner N échos parmi les L échos, **caractérisé par le fait que** certains au moins des L échos détectés sont des échos temporellement corrélés selon un critère de corrélation prédéterminé, et **par le fait que** les moyens de traitement (MTS) comportent des moyens de calcul (MC) aptes à déterminer à partir des amplitudes complexes initiales associées à au moins les échos temporellement corrélés, des énergies individuelles pondérées correspondant respectivement à des échos virtuels temporellement décorrélés, et des moyens de sélection (MS) aptes à sélectionner N échos parmi les L échos en fonction d'un critère de puissance prédéterminé prenant en compte au moins lesdites énergies individuelles pondérées.

11. Récepteur selon la revendication 10, **caractérisé par le fait que** les moyens de calcul (MC) sont aptes à déterminer des énergies individuelles pondérées à partir des amplitudes complexes initiales de l'ensemble des L échos.

12. Récepteur selon la revendication 10 ou 11, **caractérisé par le fait que** les moyens de calcul sont aptes à définir toutes les combinaisons possibles de N échos parmi les L échos détectés, et pour chacune des combinaisons, à calculer un jeu de N énergies individuelles pondérées à partir des amplitudes complexes initiales des N échos de ladite combinaison, ainsi que la somme de ces N énergies individuelles pondérées, et **par le fait que** les moyens de sélection (MS) sélectionnent la combinaison de N échos dont ladite somme associée est la plus grande.

13. Récepteur selon la revendication 12, **caractérisé par le fait que** les moyens de calcul (MC) sont aptes, pour le calcul du jeu de N énergies individuelles pondérées associé à une combinaison de N échos, à déterminer la matrice de covariance des amplitudes complexes initiales desdits N échos, et à déterminer les N valeurs propres de ladite matrice de covariance.

14. Récepteur selon la revendication 10, **caractérisé par le fait que** les L échos détectés comportant L1 échos temporellement corrélés, et L-L1 échos éventuels restants dits éloignés, L1 étant supérieur ou égal à 2 et inférieur ou égal à L, les moyens de traitement comportent des moyens de sélection auxiliaires (MSA) aptes à effectuer une première sélection selon un premier critère de sélection de L2 échos parmi les L1 échos, L2 étant inférieur ou égal à L1, **par le fait que** les moyens de calcul (MC) sont aptes à déterminer à partir des amplitudes complexes initiales des L2 échos, des énergies individuelles pondérées correspondant respectivement à des échos virtuels temporellement décorrélés et à affecter ces énergies individuelles pondérées aux L2 échos sélectionnés, et **par le fait que** les moyens de sélection (MS) sont aptes à sélectionner les N échos parmi les L2 échos et les L-L1 échos éloignés, en fonction d'un critère de puissance prédéterminé prenant en compte lesdites énergies individuelles pondérées et les L-L1 énergies individuelles initiales des L-L1 échos restants.

15. Récepteur selon la revendication 14, **caractérisé par le fait que** dans le cas où L1 est un nombre impair, les moyens de sélection auxiliaires (MSA) sont aptes à éliminer au moins un des L1 échos temporellement corrélés, de façon à obtenir un nombre L2 pair.

16. Récepteur selon la revendication 15, **caractérisé par le fait que** les moyens de calcul (MC) sont aptes à traiter les L2 échos par paire, **par le fait que** pour chaque paire d'échos, les moyens de calcul sont aptes à calculer une paire d'énergies individuelles pondérées à partir des amplitudes complexes initiales de la paire d'échos, et **par le fait que** les moyens de sélection (MS) sélectionnent les N échos ayant les N plus grandes valeurs d'énergie parmi les L2 énergies individuelles pondérées et les L-L1 énergies individuelles initiales des éventuels L-L1 échos éloignés.

**17.** Récepteur selon la revendication 16, **caractérisé par le fait que** pour le calcul d'une paire d'énergies individuelles pondérées associée à une paire d'échos, les moyens de calcul (MC) sont aptes à déterminer la matrice de covariance des amplitudes complexes initiales desdits échos, et à déterminer les 2 valeurs propres de ladite matrice de covariance.

**18.** Récepteur selon l'une des revendications 10 à 17, **caractérisé par le fait que** le signal reçu véhicule des symboles, chaque symbole étant constitué d'un nombre prédéterminé de fragments, et **par le fait que** deux échos sont déclarés temporellement corrélés lorsqu'il sont temporellement espacés d'une durée inférieure ou égale à la durée d'un fragment.

**19.** Composant d'un système de communication sans fil, **caractérisé par le fait qu'**il incorpore un récepteur selon l'une des revendications 10 à 18.

**20.** Composant selon la revendication 19, **caractérisé par le fait qu'**il forme un téléphone mobile cellulaire.

FIG.1

EP 1 551 108 A1

## FIG.2

RR

ES

FG1

doigt 1
doigt N

$$\sum_{j=0}^{N} in$$

OP

FGN

RMU

TU

CHU

## FIG.3

FGi

DEM5
DEM4
DEM3
DEM2
DEM1

↓4

CHU

# FIG.4

RR

FG1

FG2

ES

FG6

MCMB

OP

TU

# FIG.5

MTS

FG1

MSA

CHU

MC

MS

RMU

L$_{échos}$

N$_{échos}$

FGN

# FIG.6

Léchos

Définitions des $C_L^N$ combinaisons d'échos $CMB_j$ —61

j = 1

j = j+1 —66

$j \underset{?}{>} C_L^N$ oui / non —62

Max $S_j$ —67

Néchos

Calcul matrice de covariance $K_j$ pour $CMB_j$ —63

Détermination des valeurs propres $\lambda_{i,j}$ —64

65— $S_j = \sum_i \lambda_{i,j}$

## FIG.7

$L_{échos}$

× × ×   × ×      ×

ECH1 ECH2 ECH3   ECH4 ECH5      ECH6

L1                            L-L1

—70

× ×      × ×         ×

ECH1 ECH2   ECH4 ECH5      ECH6

L2                        L-L1

| Calcul de K | —71 |

| Calcul de K | —73 |

| Calcul valeurs propres | —72 |

| Calcul valeurs propres | —74 |

$\lambda_1, \lambda_2$          $\lambda_4, \lambda_5$          $\lambda_6$

N=3 ; choix des trois valeurs propres les plus grandes   —75

ECH1, ECH4, ECH6

**Office européen des brevets**

**RAPPORT DE RECHERCHE EUROPEENNE**

Numéro de la demande

EP 04 29 0002

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | WIN M Z ET AL: "Impact of spreading bandwidth on RAKE reception in dense multipath channels" 1999, PISCATAWAY, NJ, USA, IEEE, USA, 6 juin 1999 (1999-06-06), pages 78-82, XP002288556 VANCOUVER, BC CANADA ISBN: 0-7803-5653-5 * page 78, colonne de gauche, alinéa I * * page 79, colonne de gauche, alinéa A * * page 79, colonne de gauche, alinéa B * * page 80, colonne de gauche, alinéa IV * ----- | 1,2, 9-11,18 | H04B1/707 |
| A | FUJII T ET AL: "RAKE RECEIVED CHARACTERISTICS CONSIDERING ANTENNA DIVERSITY AND PATH DIVERSITY FOR WIDEBAND DS-CDMA SYSTEM" ELECTRONICS & COMMUNICATIONS IN JAPAN, PART I - COMMUNICATIONS, SCRIPTA TECHNICA. NEW YORK, US, vol. 84, no. 10, PART 1, 2001, pages 36-54, XP001065737 ISSN: 8756-6621 * page 38, colonne de droite, alinéa 3.1 * * page 40, colonne de gauche, alinéa 4.1.1 * ----- | 1,2, 9-11,18 | DOMAINES TECHNIQUES RECHERCHES (Int.Cl.7) H04B |

Le présent rapport a été établi pour toutes les revendications

| Lieu de la recherche | Date d'achèvement de la recherche | Examinateur |
|---|---|---|
| La Haye | 15 juillet 2004 | Amadei, D |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant